# EUROPÄISCHE PATENTSCHRIFT

(11) **EP 0 846 083 B1**
(45) Veröffentlichungstag und Bekanntmachung des Hinweises auf die Patenterteilung: **18.07.2001**
(21) Anmeldenummer: 97916455.5
(22) Anmeldetag: 09.04.1997
(51) Int. Cl.: C02F 3/30, C02F 3/12, C02F 1/72, C02F 1/44

(54) **VERFAHREN UND VORRICHTUNG ZUR AUFBEREITUNG VON WASSER AUS EINEM BIOLOGISCHEN ABBAUPROZESS**
PROCESS AND DEVICE FOR TREATMENT OF WATER FROM A BIODEGRADEABLE PROCESS
PROCEDE ET DISPOSITIF PERMETTANT DE TRAITER DE L'EAU RESULTANT D'UN PROCESSUS DE BIODEGRADATION

(30) Priorität: 10.04.1996 DE 19614214
(43) Veröffentlichungstag der Anmeldung: 10.06.1998
(73) Patentinhaber: HERHOF UMWELTTECHNIK GMBH, D-35606 Solms (DE)
(72) Erfinder: CZERMAK, Peter, D-35576 Wetzlar (DE); BENDER, Heiko, D-61200 Wölfersheim (DE)
(74) Vertreter: Zinnecker, Armin, Dipl.-Ing.
(86) Internationale Anmeldenummer: EP9701754
(87) Internationale Veröffentlichungsnummer: WO9737942

(56) Entgegenhaltungen:
- EP-A- 0 238 148
- EP-A- 0 297 417
- PATENT ABSTRACTS OF JAPAN vol. 009, no. 222 (C-302), 9.September 1985 & JP 60 082191 A (SUIDOU KIKOU KK), 10.Mai 1985,
- PATENT ABSTRACTS OF JAPAN vol. 012, no. 270 (C-515), 27.Juli 1988 & JP 63 051993 A (KENSETSUSHO DOBOKU KENKYU SHOCHO;OTHERS: 01), 5.März 1988,
- PATENT ABSTRACTS OF JAPAN vol. 010, no. 214 (C-362), 25.Juli 1986 & JP 61 054295 A (NISHIHARA ENVIRON SANIT RES CORP), 18.März 1986,
- PATENT ABSTRACTS OF JAPAN vol. 018, no. 233 (C-1195), 28.April 1994 & JP 06 023390 A (EBARA INFILCO CO LTD;OTHERS: 01), 1.Februar 1994,
- PATENT ABSTRACTS OF JAPAN vol. 095, no. 002, 31.März 1995 & JP 06 328099 A (DAIKI KK), 29.November 1994,
- PATENT ABSTRACTS OF JAPAN vol. 012, no. 299 (C-520), 15.August 1988 & JP 63 069598 A (EBARA INFILCO CO LTD;OTHERS: 01), 29.März 1988,
- PATENT ABSTRACTS OF JAPAN vol. 013, no. 137 (C-582), 5.April 1989 & JP 63 302996 A (EBARA INFILCO CO LTD;OTHERS: 01), 9.Dezember 1988,
- PATENT ABSTRACTS OF JAPAN vol. 096, no. 007, 31.Juli 1996 & JP 08 080499 A (KUBOTA CORP), 26.März 1996,

## Beschreibung

Die Erfindung betrifft ein Verfahren zur Aufbereitung von Wasser, nämlich Kondensat und/oder Sickerwasser aus einem biologischen Abbauprozeß, und eine Vorrichtung zur Durchführung eines derartigen Verfahrens.

Der biologische Abbauprozeß kann in einem geschlossenen und/oder offenen Fermentationssystem durchgeführt werden. Insbesondere handelt es sich um eine Kompostierung, vorzugsweise um eine Kompostierung von Abfällen bzw. Abfallstoffen, die organische Bestandteile beinhalten. Die Kompostierung kann in einem geschlossenen Behälter unter Zwangsbelüftung durchgeführt werden. Bei dem biologischen Abbauprozeß kann es sich ferner um einen biologischen Stabilisierungsprozeß handeln, bei dem Stoffe, insbesondere Abfall, in einem geschlossenen Behälter unter Zwangsbelüftung biologisch stabilisiert werden. Bei dem biologischen Abbauprozeß kann es sich aber auch um den Rotteprozeß einer Nachrottemiete handeln.

Aus der DE-A-44 12 890 ist ein Verfahren zur Reinigung von Wasser, insbesondere von Kondensat aus einem Kompostierungsproezß, bekannt, bei dem das Wasser in einem Bioreaktor gereinigt wird. Das Kondensat aus dem Kompostierungsprozeß wird zunächst einer biologischen Reinigung durch Sauerstoffzufuhr in einer Hochleistungsbiologie unterzogen. Danach werden durch Ultrafiltration des im Kreislauf geführten Wassers die neu entstehende Biomasse und das Permeat getrennt. Diese Verfahrensweise kann allerdings in bestimmten Anwendungsfällen dazu führen, daß das Permeat aus der Sickerwasserbehandlung verhältnismäßig hoch CSB-belastet ist und daß es eine verhältnismäßig hohe Stickstoff-Fracht mit sich führt. Ferner ist bei dem vorbekannten Verfahren ein bestimmter Aufwand für die Meßtechnik erforderlich.

Die Veröffentlichungen Patent Abstracts of Japan vol. 012, no. 299 (C-520), 15. August 1988 & JP 63 069598 A und Patent Abstracts of Japan vol. 096, no. 007, 31. Juli 1996 & JP 08 080499 offenbaren Vorrichtungen für die Behandlung organischer Abfälle, bei denen eine aerob-anaerobe Behandlung mit Ultrafiltration und Rückführung des Retentats erfolgt.

Aus der EP-A-0 238 148 ist ein Verfahren zur Reinigung von Wasser bekannt, bei dem das Wasser aerob-anaerob behandelt wird und einer katalytischen Spaltung unterworfen wird.

Aufgabe der Erfindung ist es ein Verfahren der eingangs angegebenen Art zu vereinfachen und zu verbessern sowie eine Vorrichtung zur Durchführung eines derartigen Verfahrens anzugeben.

Erfindungsgemäß wird diese Aufgabe durch die Merkmale des Anspruchs 1 gelöst. Eine erfindungsgemäße Vorrichtung zur Durchführung des Verfahrens ist in Anspruch 5 beschrieben. Vorteilhafte Weiterbildungen sind Gegenstand der Unteransprüche.

Dadurch, daß das Wasser im Wechsel in aerobe und anaerobe Zustände gebracht wird, werden schädliche Stoffe, insbesondere Stickstoffverbindungen, einfach und effektiv abgebaut.

Gemäß der Erfindung werden die infolge des biologischen Stoffwechsels in dem biologischen Abbauprozeß freigesetzten Stoffwechselprodukte, insbesondere die kondensierbaren Stoffwechselprodukte, aus dem Abgasstrom des biologischen Abbauprozesses abgeschieden, insbesondere durch Kondensation. Die Stoffwechselprodukte werden einer Wasseraufbereitungsanlage zugeführt, in der das Wasser im Wechsel in aerobe und anaerobe Zustände gebracht wird. Das besondere Merkmal der Stoffwechselprodukte bzw. der kondensierbaren Stoffwechselprodukte (Kondensationsprodukte) besteht darin, daß durch den hohen Wärmeinhalt des biologisch gebildeten Wassers und infolge des darin gelösten CO₂ mit dem sich ändernden pH-Wert Stickstoffverbindungen frei werden, die umweltneutral aufbereitet werden müssen. Erfindungsgemäß wird dies dadurch erreicht, daß die biologische Reinigung in oxisch/ anoxisch intermittierendem Betrieb erfolgt, wobei durch Nitrifikation und Denitrifikation Stickstoff elementar freigesetzt wird und in die Atmosphäre abgeleitet werden kann.

Vorteilhaft ist es, wenn in dem Wasser zunächst schwer abbaubare Verbindungen durch katalytische Spaltung zerstört werden und anschließend das Wasser im Wechsel in aerobe und anaerobe Zustände gebracht wird. Die katalytische Spaltung kann durch eine Ozonierung erfolgen. Es sind aber auch andere Maßnahmen möglich, beispielsweise die Behandlung mit H₂O₂ (Wasserstoffperoxid) und/ oder die Bestrahlung mit UV-Strahlen.

Ein Merkmal der Erfindung besteht darin, eine Ultrafiltration und eine Nanofiltration nachzuschalten. Das Wasser wird also ultrafiltriert und nanofiltriert, nachdem es im Wechsel in aerobe und anaerobe Zustände gebracht worden ist. Durch die Ultrafiltration werden das Permeat belastende CSB- und BSB-hervorrufende Bestandteile zurückgehalten, die der "Biologie", also dem Reaktionsbehälter, in dem das Wasser im Wechsel in aerobe und anaerobe Zustände gebracht wird, wieder zugeführt werden können. Durch die der Ultrafiltration nachgeschaltete Nanofiltration kann diese Wirkung noch intensiver erreicht werden. Durch die Rückführung der Retentat-Bestandteile aus der Nanofiltration verbleiben die Schmutzstoffe länger im biologischen Abbaubereich. Ferner werden dadurch die im Retentat vorhandenen Nährstoffe dem Reaktionsbehälter, in dem das Wasser im Wechsel in aerobe und anaerobe Zustände gebracht wird, wieder zugeführt.

Durch die Ultrafiltration werden schwer abbaubare, langkettige Kohlenstoffverbindungen und Kohlenwasserstoffverbindungen nicht vollständig abgefiltert. Diese Verbindungen sind allerdings als Kohlenstoff-Quelle für den Abbau der Stickstoff-Verbindungen erforderlich. Sie werden durch die Nanofiltration abgefiltert bzw. erfaßt und rückgeführt.

Zum Ausgleich eventuell fehlender Nährstoffe können derartige Nährstoffe nach einer vorteilhaften Weiterbildung dosiert von außen der "Biologie", also dem Reaktionsbehälter, in dem das Wasser im Wechsel in aerobe und anaerobe Zustände gebracht wird, zugeführt werden, beispielsweise Phosphat, C-Quellen und/oder andere geeignete Abfälle als C-Quellen.

In einer an Nährstoffen armen Flüssigkeit wie Kondensat aus der Abluft eines Rotteprozesses ist ein mikrobieller Abbau von Ammonium nur dadurch zu erreichen, daß in dieser Flüssigkeit nicht vorhandene, Bio-Zellmasse aufbauende Nährstoffe zugeführt werden. Dies erfolgt, wie oben angegeben, durch die Rückführung der Permeat-Bestandteile und/oder durch Zufuhr von außen.

Da zwischen der Durchflußleistung der Ultrafiltration und der Nanofiltration Leistungsunterschiede bestehen können, kann nach einer weiteren vorteilhaften Weiterbildung zwischen diesen beiden Stufen ein Pufferbehälter vorgesehen werden, in dem das Wasser nach der Ultrafiltration und vor der Nanofiltration eingebracht wird.

Die Erfindung ist ferner dadurch gekennzeichnet, daß die im Retentat der Nanofiltration enthaltenen, schwer abbaubaren Verbindungen durch katalytische Spaltung zerstört werden und anschließend dem Prozeß, bei dem das Wasser im Wechsel in aerobe und anaerobe Zustände gebracht wird, zugeführt werden. Wie oben bereits erläutert werden durch die Nanofiltration die von der Ultrafiltration nicht vollständig abgefilterten schwer abbaubaren langkettigen Kohlenstoffverbindungen und Kohlenwasserstoffverbindungen erfaßt. Damit diese Verbindungen noch besser und wirkungsvoller für den Abbau der schädlichen Stoffe, insbesondere der Stickstoffverbindungen, zur Verfügung stehen, werden sie zunächst durch katalytische Spaltung zerstört bzw. gespalten und anschließend dem Abbauprozeß zugeführt.

Die der Erfindung zugrundeliegende Aufgabe wird bei einer Vorrichtung zur Durchführung des erfindungsgemäßen Verfahrens durch einen Reaktionsbehälter gelöst, in dem das Wasser im Wechsel in aerobe und anaerobe Zustände gebracht werden kann, sowie eine Vorrichtung zur Zerstörung schwer abbaubarer Verbindungen durch katalytische Spaltung ein Ultrafilter und ein Nanofilter und vorzugsweise einen zwischen dem oder den Ultrafiltern und dem oder den Nanofiltern vorgesehenen Pufferbehälter. Es führt eine Leitung vom Nanofilter zur Vorrichtung zur Zerstörung schwer abbaubarer Verbindungen durch katalytische Spaltung. Durch diese Leitung wird das bei der Nanofiltration abgetrennte Retentat der Vorrichtung zur katalytischen Spaltung zugeführt.

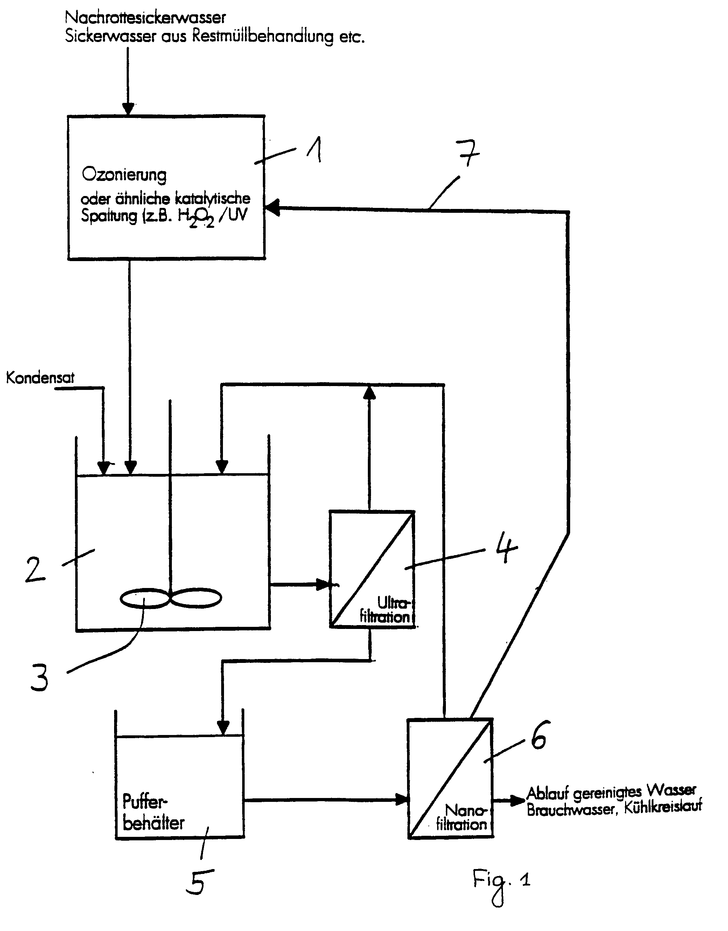

Ein Ausführungsbeispiel der Erfindung wird nachstehend anhand der beigefügten Zeichnung im einzelnen erläutert. In der Zeichnung zeigt die
- einzige Fig.: eine schematische Darstellung einer Wasseraufbereitungsanlage zur Durchführung des erfindungsgemäßen Verfahrens.

Die in der einzigen Fig. schematisch dargestellte Wasseraufbereitungsanlage besitzt eine Vorrichtung 1 zur Zerstörung schwer abbaubarer Verbindungen durch katalytische Spaltung, beispielsweise Ozonierung oder H₂O₂-Behandlung oder UV-Bestrahlung. Das aus einem biologischen Abbauprozeß stammende Nachrottesickerwasser und/oder das Sickerwasser aus einer Restmüllbehandlung wird der Vorrichtung 1 zugeführt.

Das von der Vorrichtung 1 behandelte Wasser wird anschließend in einen Reaktionsbehälter 2 geleitet, in dem das Wasser im Wechsel in aerobe und anaerobe Zustände gebracht wird. In den Reaktionsbehälter kann ferner (unbehandeltes) Kondensat, vorzugsweise aus einem biologischen Abbauprozeß, eingebracht werden. Der Reaktionsbehälter 2 besitzt eine Rühreinrichtung 3.

Von dem Reaktionsbehälter 2 wird das dort behandelte Wasser einem Ultrafilter 4 zugeführt. Das Retentat wird wieder in den Reaktionsbehälter 2 zurückgeleitet. Das Permeat wird einem Pufferbehälter 5 zugeführt und von dort zu einem Nanofilter 6 geleitet. Das Permeat des Nanofilters 6 läuft als gereinigtes Wasser bzw. Brauchwasser ab. Es kann ferner für einen Kühlkreislauf verwendet werden. Das Retentat des Nanofilters 6 wird dem Reaktionsbehälter 2 zugeleitet. Statt dessen oder zusätzlich kann das Retentat des Nanofilters 6 bzw. ein Teil davon durch die Leitung 7 der Vorrichtung 1 zur Zerstörung schwer abbaubarer Verbindungen durch katalytische Spaltung zugeführt werden.

Das erfindungsgemäße Verfahren eröffnet insbesondere die Möglichkeit, biologisch schwerer abbaubare organische Verbindungen sicher und mit höherem Wirkungsgrad als bisher zu entfernen, wobei die Kontrolle auf Reinheit mittels optischer Kontrolle erfolgen kann. Mit dem erfindungsgemäßen Verfahren und der erfindungsgemäßen Vorrichtung können Kondensate und Sickerwässer aus biologischen Abfallbehandlungsanlagen aufbereitet werden. Wie anhand des Beispiels erläutert, werden in den Abwässern zunächst durch katalytische Spaltung (z.B. Ozon, H₂O₂, UV) schwer abbaubare Verbindungen zerstört. Danach wird das Wasser zur Stickstoffelimination im Wechsel in aerobe und anaerobe Zustände gebracht und sodann einer Ultrafiltration und anschließend einer Nanofiltration unterzogen. Nach optisch gesteuerter Abtrennung des Permeates werden dem in die Biologie zugeführten Konzentrat bzw. Retentat fehlende Nährstoffe zugegeben. Zwischen der Ultrafiltration und der Nanofiltration ist ein Pufferbehälter vorgesehen, durch den die unterschiedlichen Leistungen beider Systeme ausgeglichen werden.

## Patentansprüche

1. Verfahren zur Aufbereitung von Kondensat und/oder Sickerwasser aus einem biologischen Abbauprozeß,
dadurch gekennzeichnet,
daß das Wasser im Wechsel in aerobe und anaerobe Zustände gebracht wird, daß das Wasser anschließend ultrafiltriert wird, daß das Wasser nach der Ultrafiltration nanofiltriert wird, daß das bei der Ultrafiltration und/oder bei der Nanofiltration abgetrennte Retentat dem Prozeß, bei dem das Wasser im Wechsel in aerobe und anaerobe Zustände gebracht wird, zugeführt wird, und daß die im Retentat der Nanofiltration enthaltenen, schwer abbaubaren Verbindungen durch katalytische Spaltung zerstört werden und anschließend dem Prozeß, bei dem das Wasser im Wechsel in aerobe und anaerobe Zustände gebracht wird, zugeführt werden.

2. Verfahren nach Anspruch 1, dadurch gekennzeichnet, daß in dem Wasser zunächst schwer abbaubare Verbindungen durch katalytische Spaltung zerstört werden.

3. Verfahren nach Anspruch 1 oder 2, dadurch gekennzeichnet, daß das Wasser nach der Ultrafiltration und vor der Nanofiltration in einen Pufferbehälter eingebracht wird.

4. Verfahren nach einem der vorhergehenden Ansprüche, dadurch gekennzeichnet, daß dem Retentat Stoffe, insbesondere Nährstoffe, zugegeben werden.

5. Vorrichtung zur Durchführung des Verfahrens nach einem der vorhergehenden Ansprüche
mit einem Reaktionsbehälter (2), in dem das Wasser im Wechsel in aerobe und anaerobe Zustände gebracht wird, einer Vorrichtung (1) zur Zerstörung schwer abbaubarer Verbindungen durch katalytische Spaltung, einer Leitung von der Vorrichtung (1) zum Reaktionsbehalter (2) einem Ultrafilter (4) und einem Nanofilter (6) die dem Reaktor (2) nachgeschaltet sind sowie einer Leitung (7) vom Nanofilter (6) zur Vorrichtung (1) zur Zerstörung schwer abbaubarer Verbindungen durch katalytische Spaltung.

6. Vorrichtung nach Anspruch 5, gekennzeichnet durch einen zwischen dem oder den Ultrafiltern (4) und dem oder den Nanofiltern (6) vorgesehenen Pufferbehälter (5).

7. Verfahren nach Anspruch 6, dadurch gekennzeichnet, daß dem Retentat Stoffe, insbesondere Nährstoffe, zugegeben werden.

8. Verfahren nach Anspruch 6 oder 7, dadurch gekennzeichnet, daß die im Retentat der Nanofiltration enthaltenen, schwer abbaubaren Verbindungen durch katalytische Spaltung zerstört werden und anschließend dem Prozeß, bei dem das Wasser im Wechsel in aerobe und anaerobe Zustände gebracht wird, zugeführt werden.

9. Vorrichtung zur Durchführung des Verfahrens nach einem der vorhergehenden Ansprüche mit einem Reaktionsbehälter, in dem das Wasser im Wechsel in aerobe und anaerobe Zustände gebracht wird.

10. Vorrichtung nach Anspruch 9, gekennzeichnet durch eine Vorrichtung zur Zerstörung schwer abbaubarer Verbindungen durch katalytische Spaltung.

11. Vorrichtung nach Anspruch 9 oder 10, gekennzeichnet durch ein Ultrafilter.

12. Vorrichtung nach einem der Ansprüche 9 bis 11, gekennzeichnet durch ein Nanofilter.

13. Vorrichtung nach Anspruch 12, gekennzeichnet durch einen zwischen dem oder den Ultrafiltern und dem oder den Nanofiltern vorgesehenen Pufferbehälter.

14. Vorrichtung nach Anspruch 12 oder 13, gekennzeichnet durch eine Leitung (7) vom Nanofilter (6) zur Vorrichtung (1) zur Zerstörung schwer abbaubarer Verbindungen durch katalytische Spaltung.

## Claims

1. Process for the treatment of condensate and/or leakage water from a biodegradable process,
characterised in that:
the water is taken alternatively into an aerobic and anaerobic condition, that the water is subsequently ultrafiltered, that the water following ultrafiltration is nanofiltered, that the residue separated during ultrafiltration and/or nanofiltration is taken to the process during which the water is taken alternatively into an aerobic and anaerobic condition, and that the compounds contained in the residue of the nanofiltration which are hard to degrade are destroyed by catalytic fission and are subsequently taken to the process during which the water is taken alternatively into an aerobic and anaerobic condition.

2. Process according to Claim 1, characterised in that the compounds contained in the water and which are hard to degrade are first destroyed by catalytic fission.

3. Process according to Claim 1 or 2, characterised in that, following ultrafiltration and before nanofiltration, the water is taken to a buffer container.

4. Process according to one of the preceding claims, characterised in that substances, particularly nutrients, are added to the residue.

5. Device to carry out the process according to one of the preceding claims,
with a reaction container (2) in which the water is taken alternatively into an aerobic and anaerobic condition, a device (1) to destroy by catalytic fission compounds which are difficult to degrade, a conduit from the device (1) to the reaction container (2), an ultrafilter (4) and a nanofilter (6) located behind the reactor (2), as well as a conduit (7) from the nanofilter (6) to the device (1) to destroy by catalytic fission compounds which are difficult to degrade.

6. Device according to Claim 5, characterised by a buffer container (5) provided between the ultrafilter or ultrafilters (4) and the nanofilter or nanofilters (6).

7. Process according to Claim 6, characterised in that substances, particularly nutrients, are added to the residue.

8. Process according to Claims 6 or 7, characterised in that the compounds which are difficult to degrade contained in the residue of nanofiltration are destroyed by catalytic fission and are then taken to the process during which the water is alternatively taken into an aerobic and anaerobic condition.

9. Device to carry out the process according to one of the preceding claims, with a reaction container in which the water is taken alternatively into an aerobic and anaerobic condition.

10. Device according to Claim 9, characterised by a device to destroy by catalytic fission compounds which are difficult to degrade.

11. Device according to Claim 9 or 10 characterised by an ultrafilter.

12. Device according to one of Claims 9 to 11 characterised by a nanofilter.

13. Device according to Claim 12 characterised by a buffer container located between the ultrafilter or ultrafilters and the nanofilter or nanofilters.

14. Device according to Claim 12 or 13 characterised by a conduit (7) from the nanofilter (6) to the device (1) to destroy by catalytic fission compounds which are difficult to degrade.

## Revendications

1. Procédé permettant de traiter un condensat et/ou de l'eau d'infiltration résultant d'un processus de biodégradation,
caractérisé en ce
que l'eau est alternativement amenée à des états aérobies et anaérobies, que l'eau est ensuite ultrafiltrée, que l'eau est nanofiltrée après l'ultrafiltration, que le rétentat séparé lors de l'ultrafiltration et/ou de la nanofiltration est acheminé au processus dans lequel l'eau est amenée alternativement à des états aérobies et anaérobies et que les composés difficiles à dégrader contenus dans le rétentat de la nanonfiltration sont détruits par fission catalytique et ensuite acheminés au processus dans lequel l'eau est amenée alternativement à des états aérobies et anaérobies.

2. Procédé selon la revendication 1, caractérisé en ce que dans l'eau des composés difficiles à dégrader sont d'abord détruits par fission catalytique.

3. Procédé selon les revendications 1 ou 2, caractérisé en ce que l'eau est amenée à un réservoir tampon après l'ultrafiltration et avant la nanofiltration.

4. Procédé selon l'un quelconque des revendications précédentes, caractérisé en ce que des substances, surtout des substances nutritives, sont ajoutées au rétentat.

5. Dispositif pour la réalisation du procédé selon l'une quelconque des revendications précédentes, comportant
un réservoir de réaction (2) dans lequel l'eau est alternativement amenée à des états aérobies et anaérobies, un dispositif (1) pour la destruction par fission catalytique de composés difficiles à dégrader, une conduite du dispositif (1) vers le réservoir de réaction (2), un ultrafiltre (4) et un nanofiltre (6) qui sont placés en aval du réacteur (2) ainsi qu'une conduite (7) du nanofiltre (6) vers le dispositif (1) pour la destruction par fission catalytique de composés difficiles à dégrader.

6. Dispositif selon la revendication 5, caractérisé par un réservoir tampon (5) prévu entre le ou les ultrafiltre(s) (4) et le ou les nanofiltre(s) (6).

7. Procédé selon la revendication 6, caractérisé en ce que des substances, notamment des substances nutritives, sont ajoutées au rétentat.

8. Procédé selon les revendications 6 ou 7, caractérisé en ce que les composés difficiles à dégrader contenus dans le rétentat de la nanofiltration sont détruits par fission catalytique et ensuite acheminés au processus dans lequel l'eau est amenée alternativement à des états aérobies et anaérobies.

9. Dispositif pour la réalisation du procédé selon l'une quelconque des revendications précédentes, comportant un réservoir de réaction dans lequel l'eau est alternativement amenée à des états aérobies et anaérobies.

10. Dispositif selon la revendication 9, caractérisé par un dispositif pour la destruction par fission catalytique de composés difficiles à dégrader.

11. Dispositif selon les revendications 9 ou 10, caractérisé par un ultrafiltre.

12. Dispositif selon l'une quelconque des revendications 9 à 11, caractérisé par un nanofiltre.

13. Dispositif selon la revendication 12, caractérisé par un réservoir tampon prévu entre le ou les ultrafiltre(s) et le ou les nanofiltre(s).

14. Dispositif selon les revendications 12 ou 13, caractérisé par une conduite (7) entre le nanofiltre (6) et le dispositif (1) pour la destruction par fission catalytique de composés difficiles à dégrader.
